# FASCICULE DE BREVET EUROPEEN

(11) **EP 0 423 048 B1**
(45) Date de publication et mention de la délivrance du brevet: **23.06.1993**
(21) Numéro de dépôt: 90440083.5
(22) Date de dépôt: 27.09.1990
(51) Int. Cl.: A21B 1/44, A21B 3/07

(54) **Four de boulangerie à cuisson continue**
Bäckereiofen zum kontinuierlichen Kochen
Bakers' oven for continuous cooking

(30) Priorité: 09.10.1989 FR 8913316
(43) Date de publication de la demande: 17.04.1991
(73) Titulaire: Voegtlin, René, F-67200 Strasbourg (FR)
(72) Inventeur: Voegtlin, René, F-67200 Strasbourg (FR)
(74) Mandataire: Aubertin, François

(56) Documents cités:
- DE-A- 1 928 652
- FR-A- 2 345 925
- FR-A- 2 428 977

## Description

L'invention concerne un four de boulangerie à cuisson continue comprenant une enceinte de cuisson munie d'une bouche d'enfournement et d'une bouche de défournement et renfermant un dispositif de transport hélicoïdal muni d'un chemin hélicoïdal pour acheminer pendant la cuisson les produits de boulangerie, viennoiserie ou similaire, disposés sur des plaques, plateaux, filets ou analogues, depuis la bouche d'enfournement à la bouche de défournement. Un tel four est décrit dans le document FR-A-2 345 925

La présente invention concerne le domaine de l'industrie agro-alimentaire et, plus particulièrement, les fabricants de matériel de production destiné à la boulangerie, viennoiserie ou analogue.

On connaît déjà des fours à cuisson continue s'insérant généralement, dans des chaînes de fabrication complètes autorisant une cadence de production élevée.

L'expérience a su démontrer qu'en conférant une certaine rotation aux plaques, plateaux, filets ou analogues autour d'un axe vertical lors de leur séjour dans une enceinte de cuisson traversée par un flux d'air chaud, on obtient la meilleure régularité de la cuisson des produits.

On connaît déjà des fours à un ou plusieurs chariots tournants par les documents FR-A-2.593.673, US-A-3.537.405, GB-A-855.029. Plus précisément, les plaques, plateaux, filets ou analogues, sur lesquels sont disposés les produits à cuire, sont superposés sur les tasseaux d'échelles équipant un chariot. Celui-ci est alors, introduit dans l'enceinte de cuisson du four. Puis, des moyens moteurs appropriés en assurent la rotation autour d'un axe vertical, l'exposant, ainsi, sous tous les angles, à l'attaque du flux d'air chaud horizontal produit par des moyens de soufflage et de chauffage.

Si dans ces fours à chariot tournant la cuisson des produits disposés sur une même plaque est très uniforme, la régularité de cuisson n'est pas toujours réalisée parfaitement d'une plaque à l'autre, car il est difficile d'avoir rigoureusement la même chaleur en haut, au milieu et en bas du chariot en rappelant que les plaques passent la totalité de leur durée de cuisson à un même emplacement sur ce chariot.

En fait, ces fours à chariot tournant travaillent par charges discontinues d'une pile de plaques remplissant un chariot, ils ne peuvent être intégrés facilement dans des chaînes de production industrielle où les plaques, plateaux, filets ou analogues arrivent en continu d'une unité de traitement située en amont.

Pour tenter de remédier au problème précité certains ont envisagé un four intégrant un dispositif de transport hélicoïdal comportant un convoyeur continu sous forme d'un tapis spiral muni de tringles radiales ou d'une chaîne pourvue de bras s'étendant radialement comme, par exemple, décrit dans le document GB-A-2.188.020.

En fait, ces tringles ou bras précités constituent les moyens support des plaques, plateaux ou analogues au travers de l'enceinte de cuisson du four. Or, une telle configuration présente un certain nombre d'inconvénients. En effet, lesdits plateaux, plaques ou analogues, reposant par simple gravité sur le convoyeur spiral, évoluent difficilement sur des trajectoires en courbes et sont amenés à se mouvoir de façon aléatoire les uns par rapport aux autres. Finalement, certains de ces plateaux, plaques ou analogues, viennent à se rencontrer au cours de leur transport et provoquent des bourrages constants sur le convoyeur spiral. Il en résulte des arrêts fréquents de l'installation pour permettre l'intervention d'un opérateur.

De plus, il convient de remarquer que l'usage d'un tel convoyeur hélicoïdal continu est d'un prix de revient élevé, qu'il y a des difficultés pour le faire évoluer avec des petits rayons de courbure par rapport à sa largeur et qu'il nécessite des mécanismes complexes pour son entraînement, sa mise sous tension et sont trajet de bouclage entre le haut et le bas de son parcours hélicoïdal, problèmes que précisément, la présente invention cherche à résoudre.

En effet, la présente, invention a pour but de remédier à l'ensemble des inconvénients précités en proposant un four de boulangerie à cuisson continue intégrant un dispositif de transport hélicoïdal ne nécessitant aucun convoyeur continu.

L'invention telle que caractérisée dans les revendications résout le problème consistant à créer un four de boulangerie à cuisson continue comprenant une enceinte de cuisson munie d'une bouche d'enfournement et d'une bouche de défournement et renfermant un dispositif de transport hélicoïdal muni d'un chemin hélicoïdal pour acheminer les produits de boulangerie, viennoiserie ou similaire, disposés sur des plaques, plateaux, filets ou analogues, depuis la bouche d'enfournement à la bouche de défournement, ce four comportant, en outre, des châssis assurant la prise en charge individuelle desdits plateaux, plaques, filets ou analogues, à l'extérieur de l'enceinte de cuisson pour les conduire au travers de cette dernière par l'intermédiaire du dispositif de transport hélicoïdal, celui-ci comprenant des moyens pour véhiculer et guider, individuellement, lesdits châssis le long du chemin hélicoïdal.

Les avantages obtenus grâce à cette invention consistent, essentiellement, en ce que chacune des plaques, plateaux filets ou analogues, est prise en charge depuis son arrivée au niveau du four de cuisson jusqu'à la sortie de telle sorte qu'elle soit parfaitement maintenue au cours de son trajet au travers de l'enceinte de cuisson. De ce fait, on évite tout déplacement aléatoire desdites plaques, plateaux, filets ou analogues à l'intérieur de cette dernière réduisant, à néant, les risques de bourrages ou autres inconvénients imposant, habituellement, l'arrêt de l'installation.

Par ailleurs, en comparaison avec les convoyeurs spiraux connus, les châssis sur lesquels sont disposés, les plaques, plateaux, filets ou analogues, sont particulièrement, commodes à manipuler, ce qui permet de faire appel à un circuit de bouclage simplifié au maximum contribuant, ainsi, à un coût de revient et à un encombrement moindre du four de boulangerie.

L'invention est exposée, ci-après, plus en détail à l'aide de dessins représentant seulement un mode d'exécution.

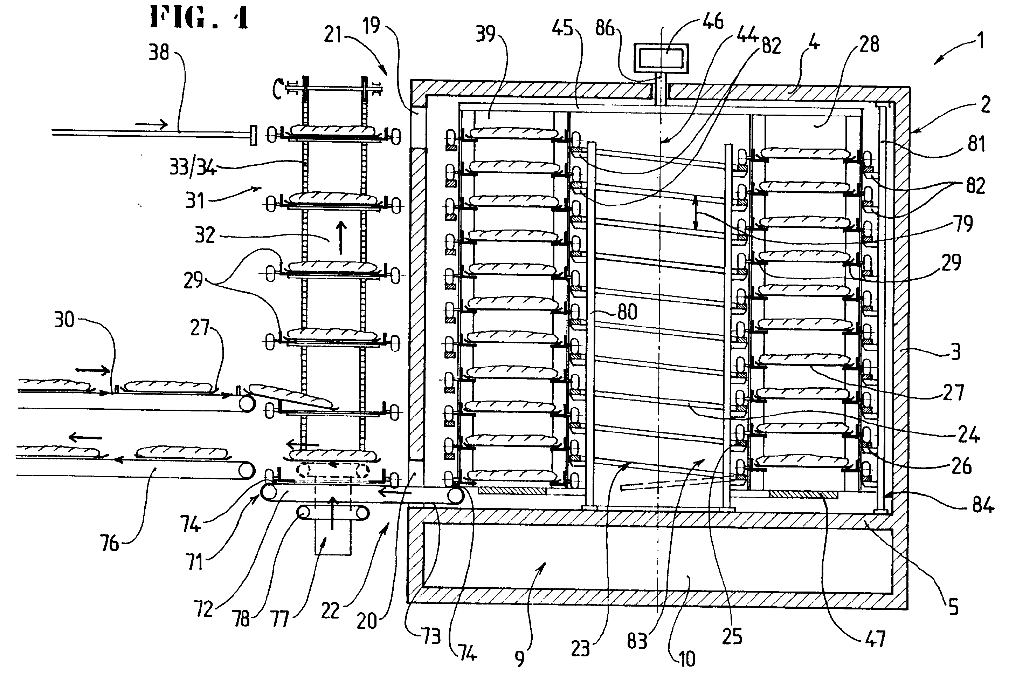

- la figure 1 représente une vue schématisée, en élévation et en coupe du four de boulangerie conforme à l'invention ;

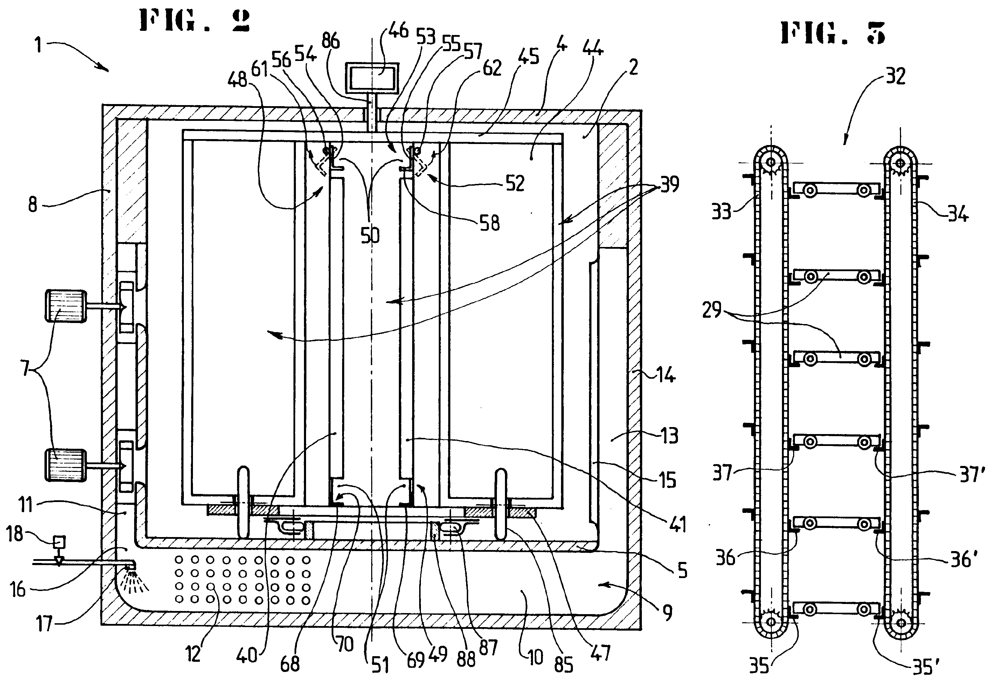

- la figure 2 représente une vue schématisée, en élévation et en coupe transversale du four tel qu'illustré dans la figure 1 (le chemin hélicoïdal ainsi que les châssis munis des plaques, plateaux ou analogues n'ayant pas été illustrés) ;
- la figure 3 représente une vue schématisée et en élévation du circuit de bouclage des châssis, circuits se situant extérieurement au four de boulangerie ;

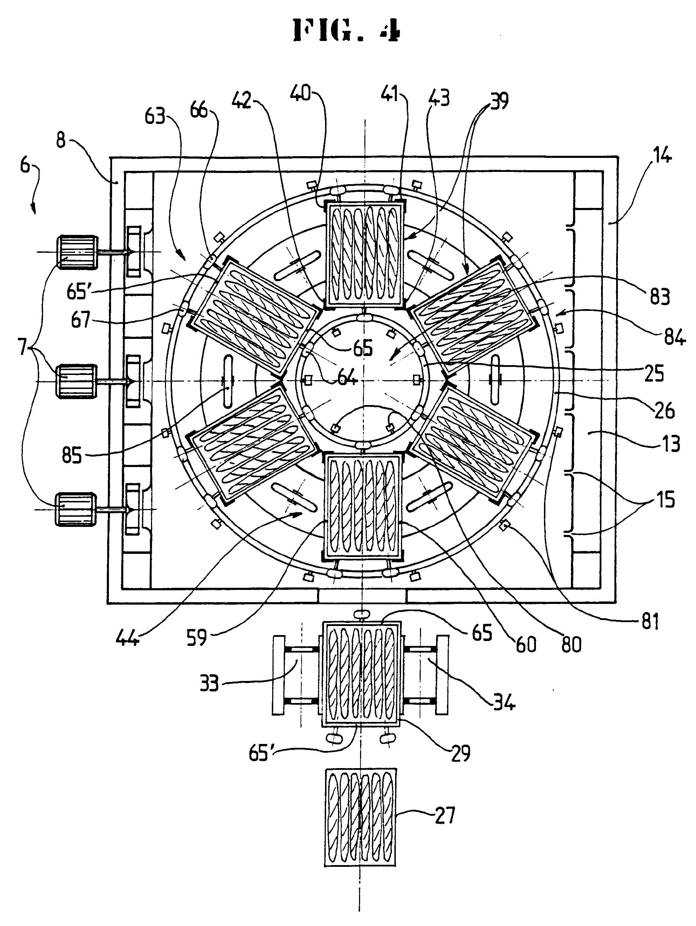

- la figure 4 représente une vue schématisée en plan et en coupe selon IV-IV de la figure 2, les châssis munis de leurs plaques, plateaux ou analogues ayant été représentés.

On se réfère aux différentes figures.

La présente invention est relative à un four de boulangerie 1 destiné à s'intégrer dans une chaîne de fabrication de produits de boulangerie, viennoiserie ou analogue pour en assurer la cuisson en continu.

Ainsi, ce four de boulangerie 1 comporte une enceinte de cuisson 2, délimitée, d'une part, par une enveloppe verticale 3 et, d'autre part, par un panneau supérieur 4 et un panneau inférieur 5 venant refermer cette enveloppe verticale 3. Un système de ventilation mécanique 6, composé de plusieurs ventilateurs 7, est disposé sur l'une des parois latérales 8 de l'enceinte de cuisson 2, de manière à créer un flux d'air chaud traversant, de part en part, cette dernière.

De plus, le four de boulangerie 1 comporte un circuit de recyclage 9 de l'air refroidi au cours de son passage dans l'enceinte de cuisson 2. Ce circuit de recyclage 9 est formé d'un caisson 10 disposé sous le panneau inférieur 5 et dans lequel débouche, d'une part, une conduite 11 permettant de canaliser l'air, en sortie des ventilateurs 7, en direction de moyens de chauffage 12. Ce caisson 10, communique d'autre part, avec des caissons de soufflage 13 disposés du côté latéral 14, opposé au système de ventilation 6, de l'enceinte de cuisson 2.

Préférentiellement, les caissons de soufflage 13 comportent des ouvertures de soufflage 15 orientées en direction des ventilateurs 7 ceci dans le but de créer dans l'enceinte de cuisson 2, un flux d'air chaud pratiquement horizontal.

Par ailleurs, au niveau de l'entrée 16, dans le caisson 10, de la conduite 11, issue des ventilateurs 7, sont disposés des gicleurs de pulvérisation d'eau 17 commandés, par exemple, par une électrovanne 18 et ayant pour office d'humidifier l'atmosphère du four de boulangerie 1 en début de cuisson.

A noter que le circuit de recyclage 9 du flux d'air chaud issu de l'enceinte de cuisson 2, ne doit pas, nécessairement, être disposé au-dessous de cette dernière mais peut, par exemple, se situer en périphérie du four de boulangerie 1.

Celui-ci comporte, en outre, une bouche d'enfournement 19 ainsi qu'une bouche de défournement 20 au travers desquelles sont introduits et prélevés, en continu, les produits de boulangerie, viennoiserie ou analogue.

Dans le cadre du mode de réalisation illustré dans les différentes figures, ces bouches d'enfournement 19 et de défournement 20 se situent, respectivement, dans la partie supérieure 21 et dans la partie inférieure 22 de l'enceinte de cuisson 2 et, ce, dans un même alignement vertical.

Toutefois, il est bien évident que cette disposition des différentes bouches 19, 20 peut être modifiée ou inversée sans que l'on s'écarte de l'esprit de la présente invention.

Il convient de remarquer que dans une unité de production industrielle de produits de boulangerie, viennoiserie ou similaire, ces derniers sont, généralement, disposés, au cours des différentes étapes de leur élaboration, sur des plaques, plateaux, filets ou analogues, facilitant, d'une part, leur manipulation et, d'autre part, leur stockage.

Aussi, la présente invention a pour but de créer, un four qui soit en mesure d'assurer la cuisson en continu de ces produits de boulangerie, viennoiserie ou similaire, disposés précisément, sur des plaques, plateaux, filets ou analogues.

Dans la suite de la description et de manière à faciliter la compréhension de cette dernière, ces plaques, plateaux, filets ou autres, seront désignés de manière générique par des plaques.

Ainsi et conformément à l'invention, ledit four de boulangerie 1 comporte, dans son enceinte de cuisson 2, un dispositif de transport hélicoïdal 23 susceptible d'assurer le transfert des plaques, depuis la bouche d'enfournement 19 de l'enceinte de cuisson 2 jusqu'à la bouche de défournement 20 et, ce, en un laps de temps correspondant au temps nécessaire à la cuisson des produits de boulangerie, viennoiserie ou analogue.

Ce dispositif de transport hélicoïdal 23 comporte un chemin hélicoïdal 24 matérialisé par deux rails 25, 26 disposés concentriquement l'un par rapport à l'autre et décrivant une trajectoire en forme de spirale.

Selon une caractéristique de la présente invention, le four de boulangerie 1 comporte, également, des châssis 29 susceptibles d'assurer la prise en charge individuelle de chacune de ces plaques 27, extérieurement, à l'enceinte de cuisson 2 pour les acheminer, le long du chemin hélicoïdal 24, depuis la bouche d'enfournement 19 vers la bouche de défournement 20.

Par ailleurs, le dispositif de transport hélicoïdal 23 comporte des moyens 28 qui soient en mesure de maintenir et de véhiculer, individuellement, chacun des châssis 29 au cours de leur déplacement sur ce chemin hélicoïdal 24.

En fait, la présente invention se propose de mettre en oeuvre des moyens qui permettent d'éviter tout déplacement aléatoire des plaques 27 à l'intérieur de l'enceinte de cuisson 2 de manière à empêcher tout bourrage de cette dernière.

Selon un mode de réalisation préférentiel, les châssis 29 sont constitués par des cadres en mesure de contenir les plaques 27. Aussi, ces châssis 29 sont constitués par un assemblage de cornières et sont de dimensions légèrement plus importantes que celles desdites plaques 27 de manière à tenir compte des tolérances de fabrication de celles-ci et des déformations qu'elles sont amenées à subir suite à un usage prolongé.

Ainsi, lesdites plaques 27, issues d'une unité de traitement en amont et en provenance d'un convoyeur d'alimentation 30, sont disposées, successivement dans ces châssis 29 avant d'être introduites dans l'enceinte de cuisson 2 au travers de la bouche d'enfournement 19.

Il est à noter que les ouvertures de soufflage 15 débutent au niveau du panneau inférieur 5 de l'enceinte de cuisson 2 et sont arrêtées à une certaine distance du panneau supérieur 4 afin d'avoir une zone de soufflage relativement calme dans la partie supérieure de cette enceinte de cuisson 2. Cela est notamment avantageux pour les produits de boulangerie ou viennoiserie sur lesquels il est préférable de ne pas souffler de l'air chaud lors de la phase initiale de cuisson de manière à autoriser la condensation de l'humidité de l'atmosphère en surface desdits produits.

En fait, ce chargement des châssis 29 s'effectue au niveau de leur circuit de bouclage 31, se situant entre la bouche de défournement 20 et la bouche d'enfournement 19. Ces dernières étant situées dans un même alignement vertical, ledit circuit de bouclage 31, est constitué par un élévateur 32 formé de deux norias 33, 34, se faisant face et sur lesquelles sont disposés, horizontalement, des tasseaux, respectivement, 35, 36, 37 et 35', 36',37' susceptibles de supporter lesdits châssis 29. Cet élévateur 32 est soumis à un mouvement d'avance séquentiel de manière à autoriser le chargement successif des plaques 27 en provenance du convoyeur d'alimentation 30.

Préférentiellement, celui-ci se situe au-dessus de la bouche de défournement 20 de manière à autoriser le prélèvement, de l'enceinte de cuisson 2, des châssis 29 chargés de leur plaque 27 garnie de produits cuits. Le problème lié à ce prélèvement des plaques du four de boulangerie 1 sera abordé ultérieurement dans la description.

Pour en revenir à la phase initiale de chargement de l'enceinte de cuisson 2, les plaques 27, une fois introduites dans les châssis 29, viennent à progresser, verticalement, et vers le haut, de manière à se situer, successivement, au droit de la bouche, d'enfournement 19. Un poussoir 38 commande alors l'engagement du châssis 29 à l'intérieur de l'enceinte de cuisson 2 de manière à le disposer sur le chemin hélicoïdal 24. Puis les moyens 28 du dispositif de transport hélicoïdal 23 en assurent le maintien et le guidage le long de ce chemin hélicoïdal 24.

A ce propos, il convient de préciser que lesdits moyens de maintien et de guidage 28 sont constitués, préférentiellement, par un groupe 39 de quatre glissières verticales 40, 41, 42, 43 enserrant le châssis 29 et plongeant dans la partie annulaire définie par les rails 25, 26 constituant le chemin hélicoïdal 24.

En fait, ce groupe 39 de glissières 40 à 43 fait partie intégrante d'un manège 44 soumis à un mouvement de rotation séquentiel comprenant plusieurs groupes 39 de glissières identiques. Le nombre de ces groupes 39 est fonction, d'une part, de la taille des châssis 29 donc des plaques 27 à véhiculer et, d'autre part, de la capacité de production que doit atteindre four de boulangerie 1.

Ainsi, selon un mode de réalisation préférentiel, ce manège 44 se compose d'un plateau supérieur 45 constitué, par exemple, par un treillis métallique et soumis à un mouvement de rotation par l'intermédiaire de moyens moteurs 46, à ce plateau supérieur 45 étant rattachées les extrémités supérieures des glissières 40 à 43 des différents groupes 39.

Par ailleurs, ces glissières 40 à 43 sont rendues solidaires, au niveau de leur extrémité inférieure, d'une plaque annulaire 47 conférant au manège 44 une meilleure rigidité. Cette plaque annulaire 47, tout comme le plateau supérieur 45 est conçue, préférentiellement, par un treillis métallique.

Ainsi, on comprend qu'en disposant les châssis 29 entre les glissières 40 à 43 des différents groupes 39, il est possible de contrôler parfaitement, leur évolution le long des rails 25, 26.

Il convient de remarquer qu'étant donné que les glissières 40 à 43 sont constituées de cornières emprisonnant les angles des châssis 29, certaines dispositions sont à prendre pour autoriser l'engagement et le retrait de ces derniers des silos que constitue chacun des groupes 39 des glissières 40 à 43. Dans ce but, les glissières 40, 41, disposées en périphérie du manège 44, présentent, au niveau de leur extrémité supérieure 48 et inférieure 49, des échancrures 50, 51 autorisant le passage desdits châssis 29 notamment lorsque ceux-ci se présentent au droit de la bouche d'enfournement 19 et de la bouche de défournement 20.

A noter, en outre, qu'en raison de la conception particulière du chemin hélicoïdal 24 par l'intermédiaire de deux rails 25, 26 espacés l'un de l'autre, il convient également, d'assurer le maintien des châssis 29, notamment, au moment de leur engagement dans l'enceinte de cuisson 2 au travers de la bouche d'enfournement 19, de sorte qu'ils ne viennent pas à tomber dans l'espace annulaire défini par lesdits rails 25 et 26.

A cet effet, chacun des groupes 39 du manège 44 comporte, dans sa partie supérieure 52, des moyens 53 susceptibles d'assurer ce transfert des châssis 29 depuis la bouche d'enfournement 19 sur lesdits rails 25, 26. De tels moyens 53 sont constitués, avantageusement, de deux cornières 54, 55 disposées aux extrémités supérieures, respectivement, des glissières 40, 42 et des glissières 41, 43. Ces cornières 54, 55 sont soumises à un mouvement de rotation autour d'un axe horizontal 56, 57 de sorte que, en position active, elles présentent l'une de leurs ailes 58 dans un plan sensiblement horizontal et sur laquelle peut reposer l'un des bords latéraux 59, 50 des châssis 29 en provenance de la bouche d'enfournement 19.

Une fois lesdits châssis 29 disposés au droit des rails 25, 26, un levier de commande 61, 62 provoque l'effacement de ces cornières 54, 55, par rotation autour de leur axe horizontal 56, 57. Ledit châssis 29 vient, ainsi, à prendre appui sur lesdits rails 25, 26 tout en s'engageant entre les glissières 40 à 43 d'un groupe 39 du manège 44.

Les leviers de commande 61, 62 peuvent être actionnés par tout moyen de manoeuvre connu de sorte qu'à l'approche d'un groupe de glissières devant la bouche d'enfournement 19, les cornières 54, 55 soient amenées en position active et que, au contraire, au moment de s'éloigner de cette bouche d'enfournement 19, elles soient ramenées dans leur position effacée. A ce propos, on indiquera, à titre d'exemple, l'usage d'une came disposée sur la face inférieure du panneau supérieure 4 correspondant à l'enceinte de cuisson 2, cette came actionnant les leviers de commande 61, 62 dans les conditions précitées.

Au vu de la description ci-dessus, on comprend qu'en assurant la rotation séquentielle du manège 44, les châssis 29 viennent à évoluer le long des spires décrites par les rails 25, 26 du chemin hélicoïdal 24 tout en se déplaçant, verticalement, à l'intérieur des glissières 40 à 43 de chacun des groupes 39.

Préférentiellement, les châssis 29 sont équipés de moyens de roulement 63 facilitant leur progression le long de cas rails 25, 26, autorisant, finalement, l'usage de moyens moteurs de puissance réduite. De tels moyens de roulement 63 sont constitués, avantageusement, d'une première roulette 64 rapportée perpendiculairement et dans le plan médian vertical sur le bord transversal arrière 65 du châssis 29. Par ailleurs, ces moyens de roulement 63 sont complétés par deux roulettes 66, 67, rapportées radialement, et à proximité des extrémités du bord transversal avant 65' dudit châssis 29.

Finalement, après un nombre de séquences de rotation déterminé, fonction d'une part, du nombre de spires décrites par le chemin hélicoïdal 24 et, d'autre part, du nombre de silos que comporte le manège 44, les châssis 29 viennent à se présenter au droit de la bouche de défournement 20 se situant au bas de l'enceinte de cuisson 2. A cet instant, il convient de les extraire de cette dernière.

De manière à ne pas gêner cette extraction des châssis 29, les rails 25, 26 sont interrompus à l'approche de ladite bouche de défournement 20. Par ailleurs, les glissières 40, 42, respectivement 41, 43 sont reliées, au niveau de leur extrémité inférieure, par l'intermédiaire de cornières ou analogues 68, 69 de manière à définir un plan d'appui horizontal 70 sur lequel vient à reposer le châssis 29 en quittant les rails 25, 26.

Conformément à l'invention, le four de boulangerie 1 est muni de moyens 71 susceptibles d'extraire le châssis 29, se présentant au droit de la bouche de défournement 20 à chaque arrêt du manège 44, puis de le disposer sur les tasseaux 35, 35' des norias 33, 34 constituant l'élévateur 32 assurant le recyclage desdits châssis 29.

Préférentiellement, ces moyens 71 sont constitués par au moins un convoyeur à chaînes 72 pénétrant dans l'enceinte de cuisson 2, au travers de la bouche de défournement 20 et, comportant une ou des chaînes 73 munies de taquets 74 susceptibles de coopérer avec au moins un organe de préhension dont est équipé le bord transversal avant 65' des châssis 29.

Ainsi, sous l'action de la rotation des chaînes 73, les taquets 74 viennent à retirer, successivement, les châssis 29 de l'enceinte de cuisson 2 pour, finalement, les déposer sur les tasseaux 35, 35' des norias 33, 34 correspondant à l'élévateur 32.

Le châssis 29, ainsi prélevé de l'enceinte de cuisson 2, est chargé d'une plaque 27 garnie de produits de boulangerie ou de viennoiserie cuits. Il s'agit donc de prélever ladite plaque 27 de ce châssis 29 pour la disposer sur un convoyeur d'évacuation 76 et autoriser, finalement, le recyclage du châssis 29.

A cet effet, le four de boulangerie 1 comporte, des moyens 77 susceptibles de prélever la plaque 27 du châssis 29 en provenance de l'enceinte de cuisson 2 et de la disposer sur le convoyeur d'évacuation 76.

Selon un mode de réalisation préférentiel, ces moyens 17 sont constitués par deux transporteurs à chaînes de dimension réduite 78 venant à soulever la plaque 27, garnie de produits cuits en passant au travers du cadre que constitue le châssis 29. Cette plaque 27 est ainsi élevée légèrement au-dessus de ce dernier, puis, sous l'effet de la rotation des chaînes transférée sur le convoyeur d'évacuation 76.

Tels que décrits ci-dessus, les châssis 29 munis de leur plaque 27 garnie de produits à cuire, reposent sur les rails 25, 26, du chemin hélicoïdal 24, ces rails 25, 26 étant, par ailleurs, supportés par l'intermédiaire de poteaux, respectivement, 80, 81 munis de consoles 82 et disposés dans la partie interne 83 et en périphérie 84 de ce chemin hélicoïdal 24. De ce fait, le manège 44 ne subit que les efforts liés à la commande en rotation de ces châssis 29 et non leur poids. Il peut donc être envisagé de suspendre ce manège 44, par l'intermédiaire de son plateau supérieur 45, au panneau supérieur 4 de l'enceinte de cuisson 2. Toutefois, il peut également être prévu de munir la plaque annulaire inférieure 47 de moyens de roulement 85 prenant appui sur le panneau inférieur 5 de ladite enceinte de cuisson 2. Cette dernière solution, tout en limitant les contraintes au niveau du panneau supérieur 4, facilite le montage du four de boulangerie 1.

Dans le cadre du mode de réalisation représenté dans les différentes figures, le centrage du manège 44 est obtenu, d'une part, par le guidage de l'arbre d'entraînement 86, coopérant avec les moyens moteurs 46, au travers du panneau supérieur 4 et, d'autre part, à l'aide de galets 87 rapportés sous la plaque annulaire inférieure 47, galets 87 coopérant avec un guide circulaire 88 fixé sur le panneau inférieur 5 de l'enceinte de cuisson 2.

Bien entendu, d'autres modes de réalisation de ce centrage du manège 44 dans l'enceinte de cuisson 2 sont envisageables sans que l'on s'écarte, pour autant, du cadre et de l'esprit de la présente invention.

Tel qu'il vient d'être précisé le manège 44 n'a pour tâche que de guider et pousser les châssis 29 sur les rails 25, 26. Cependant, étant donné que sa rotation est de type séquentiel, il se doit de vaincre les forces d'inertie liées à la charge que représentent ces châssis 29 munis de leur plaque 27 garnie de produits à cuire, et, ce, à chaque séquence de rotation.

De ce fait, il est préconisé selon l'invention, de munir le four de boulangerie 1 de moyens moteurs 46 susceptibles de conférer une accélération et une décélération progressive au manège 44 à chaque séquence de rotation.

En résumé, le fonctionnement du four de boulangerie à cuisson continue, objet de la présente invention, est le suivant :
- pendant la phase d'arrêt de l'élévateur 32, une plaque 27 garnie de produits à cuire et en provenance d'un convoyeur d'alimentation 30 est disposée sur un châssis 29 vide situé sur cet élévateur 32 ;
- par ailleurs, le châssis 29, muni d'une plaque 27 et se situant sur l'élévateur 32 à hauteur de la bouche d'enfournement 19, est introduit par l'intermédiaire du poussoir 38, dans l'enceinte de cuisson 2 ;
- simultanément, un châssis 29 est prélevé de l'enceinte de cuisson 2 au travers de la bouche de défournement 20 puis la plaque 27 garnie de produits cuits en est retirée et disposée sur le convoyeur d'évacuation 76 ;
- au cours de l'étape suivante, le manège 44 entame une rotation d'un angle déterminé afin de présenter le silo suivant, formé par un groupe 39 de glissières 40 à 43 au droit des bouches d'enfournement 19 et de défournement 20 ;
- pendant cette rotation du manège 44, les cornières 54, 55 sur lesquelles repose le châssis 29 venant d'être inséré dans l'enceinte de cuisson 2, viennent à s'effacer autorisant ce dernier à prendre appui sur les rails 25, 26 ;
- par ailleurs, durant cette séquence de rotation du manège 44, le châssis 29, à l'approche de la bouche de défournement 20, quitte lesdites rails 25, 26 pour se positionner sur le plan d'appui horizontal 70 défini au bas des glissières 40 à 43 ;
- de plus, cette rotation du manège 44 est accompagnée par l'élévation d'un pas, des châssis 29 disposés sur l'élévateur 32, pour d'une part, présenter un châssis 29 vide au droit du convoyeur d'alimentation 30 en plaques 27 garnies de produits à cuire et, d'autre part, pour disposer un châssis 29, chargé d'une telle plaque au droit de la bouche d'enfournement 19 ;
- puis le cycle reprend à son début.

La rapidité de l'exécution d'un tel cycle peut être prévue modulable de telle sorte que l'on puisse agir sur le temps de cuisson en fonction de la nature des produits à cuire.

Par ailleurs, la capacité de production de tels fours de boulangerie 1 est également modulable en intervenant, notamment, sur le nombre de spires, décrites par le chemin hélicoïdal 24 ou sur le nombre de châssis 29 répartis sur une telle spire. A noter, à ce propos, que le pas 79 d'une spire est dépendant de la hauteur des produits à cuire.

Ainsi, la présente invention permet de remédier à l'ensemble des inconvénients que l'on rencontre, habituellement, dans le cadre des fours de boulangerie à cuisson continue.

Plus précisément, en faisant appel à des moyens de prise en charge individuelle de chacun des plateaux, plaques, filets ou analogues pour assurer le transfert de ce dernier au travers de l'enceinte de cuisson renfermant un dispositif de transport hélicoïdal, la présente invention permet de remédier au problème d'encombrement du four de boulangerie tout en évitant l'usage d'un convoyeur spiral particulièrement onéreux et sur lequel lesdits plateaux, plaques, filets ou analogues sont amenés à se mouvoir de façon aléatoire.

Par ailleurs, en s'assurant d'une rotation des plaques, plateaux, filets ou analogues autour d'un axe vertical, le présent four de boulangerie permet de garantir une parfaite régularité de la cuisson des produits.

## Revendications

1. Four de boulangerie à cuisson continue comprenant une enceinte de cuisson (2) munie d'une bouche d'enfournement (19) et d'une bouche de défournement (20) et renfermant un dispositif de transport hélicoïdal (23) muni d'un chemin hélicoïdal (24) pour acheminer les produits de boulangerie, viennoiserie ou similaires disposés sur des plateaux, plaques, filets ou analogues (27), depuis la bouche d'enfournement (19) à la bouche de défournement (20), four caractérisé par le fait qu'il comporte des châssis (29) assurant la prise en charge individuelle desdites plaques, plateaux, filets ou analogues (17), à l'extérieur de l'enceinte de cuisson (2) pour les conduire au travers de cette dernière par l'intermédiaire du dispositif de transport hélicoïdal (23), celui-ci comprenant des moyens (28) pour véhiculer et guider, individuellement, lesdits châssis (29) le long du chemin hélicoïdal (24).

2. Four de boulangerie selon la revendication 1, caractérisé par le fait que le chemin hélicoïdal (24) est constitué par deux rails (25, 26) disposés concentriquement l'un par rapport à l'autre et décrivant une trajectoire en forme de spirale, ces rails (25, 26) étant supportés par l'intermédiaire de poteaux (80, 81) munis de console (82) et disposés, respectivement, dans la partie interne (83) et en périphérie (84) de ce chemin hélicoïdal (24).

3. Four de boulangerie selon les revendications 1 et 2, caractérisé par le fait que les châssis (29) sont constitués par des cadres formés par un assemblage de cornières et dont les dimensions sont légèrement supérieures aux plateaux, plaques, filets ou analogues (27) de manière à être aptes à contenir ces derniers, ces châssis (29) étant équipés de moyens de roulement (63) facilitant leur progression le long des rails (25, 26), ces moyens de roulement (63) étant constitués, d'une part, par une roulette (64) rapportée perpendiculairement et dans le plan médian vertical, sur le bord transversal arrière (65) du châssis (29) et d'autre part, par deux roulettes (66, 67) rapportées, radialement, et à proximité des extrémités du bord transversal avant (65') dudit châssis (29).

4. Four de boulangerie selon la revendication 1, caractérisé par le fait que la bouche d'enfournement (19) et la bouche de défournement (20) sont disposées, respectivement, dans la partie supérieure (21) et inférieure (22) de l'enceinte de cuisson (2) et dans un même alignement vertical, entre ces bouches d'enfournement (19) et de défournement (20) et extérieurement à l'enceinte de cuisson (2) étant implanté un circuit de bouclage (31) des châssis (29) constitué d'un élévateur (32) formé de deux norias (33, 34) se faisant face et sur lesquelles sont disposés, horizontalement, des tasseaux, respectivement, (35, 36, 37) et (35', 36', 37') susceptibles de supporter lesdits châssis (29) extraits de l'enceinte de cuisson (2) au niveau de la bouche de défournement (20) à l'aide de moyens (71) appropriés, puis d'élever ces châssis (29) au niveau de la bouche d'enfournement (19) au travers de laquelle ils regagnent ladite enceinte de cuisson (2) sous l'action d'un poussoir (38).

5. Four de boulangerie selon la revendication 4, caractérisé par le fait que les moyens (71) sont constitués par au moins un convoyeur à chaîne (72) pénétrant dans l'enceinte de cuisson (2) au travers de la bouche de défournement (20) et comportant une ou des chaînes (73) munies de taquets (74) susceptibles de coopérer avec au moins un organe de préhension dont est équipé le bord transversal avant (65') des châssis (29), ces taquets (74), sous l'action de la rotation des chaînes (73), venant à retirer successivement, les châssis (29) de l'enceinte de cuisson (2) pour les déposer sur les tasseaux (35, 35') des norias (33, 34).

6. Four de boulangerie selon les revendications 1 à 4, caractérisé par le fait qu'il comporte des moyens (77) susceptibles de prélever le plateau, plaque, filet ou analogue (27), garni de produits cuits, du châssis (29) en provenance de l'enceinte de cuisson (2) et de le disposer sur un convoyeur d'évacuation (76), ces moyens (77) étant constitués par deux transporteurs à chaîne de dimension réduite (78) venant à soulever ledit plateau, plaque, filet ou analogue (27) à hauteur dudit convoyeur d'évacuation (76), en passant au travers du cadre constitué par le châssis (29).

7. Four de boulangerie selon les revendications 1 et 2, caractérisé par le fait que les moyens (28) pour véhiculer et guider, individuellement, les châssis (29) le long du chemin hélicoïdal (24) sont constitués par un manège (44) soumis à un mouvement de rotation séquentielle et comprenant au moins un groupe (39) de quatre glissières verticales (40 à 43) plongeant dans la partie annulaire, définie par les rails (25, 26), ces glissières (40 à 43) étant constituées par des cornières susceptibles d'enserrer un ou plusieurs châssis superposés (29).

8. Four de boulangerie selon la revendication 7, caractérisé par le fait que les glissières (40 et 41), disposées en périphérie du manège (44), présentent, au niveau de leur extrémité supérieure (48) et inférieure (49), des échancrures (50, 51) autorisant le passage des châssis (29) lorsque ceux-ci se présentent au droit de la bouche d'enfournement (19) et de la bouche de défournement (20).

9. Four de boulangerie selon les revendications 7 et 8, caractérisé par le fait que :
- d'une part, chaque groupe (39) de glissières (40 à 43) du manège (44) comporte, dans sa partie supérieure (52) des moyens (53) susceptibles d'assurer le transfert des châssis (29) depuis la bouche d'enfournement (19) sur les rails (25, 26) du chemin hélicoïdal (24) ces moyens (53) étant constitués de deux cornières (54, 55) disposées aux extrémités supérieures (48), respectivement, des glissières (40, 42) et des glissières (41, 43), et soumises à un mouvement de rotation autour d'un axe horizontal (56, 57) de sorte que, d'une part, elles présentent, en position active, l'une de leur aile (58) dans un plan sensiblement horizontal et sur laquelle peut reposer l'un des bords latéraux (59, 60) des châssis (29) en provenance de la bouche d'enfournement (19) et, d'autre part, elles sont en mesure de s'effacer sous l'effet de leviers de commande (61, 62) actionnés par l'intermédiaire de moyens de manoeuvre tels qu'une came ou analogue, une fois lesdits châssis (29) disposés au droit des rails (25, 26) du chemin hélicoïdal (24) ;
- d'autre part, les rails (25, 26), constituant ce chemin hélicoïdal (24), sont interrompus à l'approche de la bouche de défournement (20) permettant aux châssis (29), avant d'être extraits de l'enceinte de cuisson (2), de reposer sur un plan d'appui horizontal (70) aménagé à l'extrémité inférieure (49) des glissières (40 à 43) d'un groupe (39) du manège (44).

10. Four de boulangerie selon la revendication 7, caractérisé par le fait que le manège (44) se compose d'un plateau supérieur (45) constitué par un treillis métallique ou analogue et soumis à un mouvement de rotation séquentielle par l'intermédiaire de moyens moteurs (46), à ce plateau supérieur (45) étant rattachées les extrémités supérieures (48) des glissières (40 à 43) des différents groupes (39), ces glissières (40 à 43) étant rendues solidaires, en outre, au niveau de leur extrémité inférieure (49) d'une plaque annulaire (47) en forme de treillis métallique ou similaire, conférant au manège (44) une meilleure rigidité et comportant des moyens de roulement (85) prenant appui sur le panneau inférieur (5) de l'enceinte de cuisson (2).

11. Four de boulangerie selon la revendication 10, caractérisé par le fait que le manège (44) est centré par rapport à l'enceinte de cuisson (2), d'une part, par l'intermédiaire du guidage, au travers du panneau supérieur (4) de cette dernière, d'un arbre d'entraînement (86) reliant le plateau supérieur (45) de ce manège (44) aux moyens moteurs (46) et, d'autre part, à l'aide de galets (87) rapportés sous la plaque annulaire inférieure (47) et coopérant avec un guide circulaire (88) fixé sur le panneau inférieur (5) de l'enceinte de cuisson (2).

12. Four de boulangerie selon la revendication 7, caractérisé par le fait que le manège (44) est animé d'un mouvement de rotation séquentielle par l'intermédiaire de moyens moteurs (46) susceptibles de lui conférer une accélération et une décélération progressive à chaque séquence de rotation.

13. Four de boulangerie selon la revendication 1, comprenant un système de ventilation mécanique (6) disposé sur l'une des parois latérales (8) de l'enceinte de cuisson (2), un circuit de recyclage (9) de l'air refroidi au cours de son passage dans cette dernière et des caissons de soufflage (13) disposés du côté latéral (14), opposé au système de ventilation métallique (6), de ladite enceinte de cuisson (2), four caractérisé par le fait que les caissons de soufflage (13) comportent des ouvertures de soufflage (15) orientées en direction du système de ventilation mécanique (6) pour créer un flux d'air chaud pratiquement horizontal, ces ouvertures de soufflage (15) débutant au niveau du panneau inférieur (5) de l'enceinte de cuisson (2) et étant arrêtées à une certaine distance du panneau supérieur (4) de cette dernière afin d'obtenir une zone de soufflage relativement calme dans la partie supérieure (21) de ladite enceinte de cuisson (2) où se situe la bouche d'enfournement (19).

## Claims

1. Baker's oven for continuous baking, comprising a baking chamber (2) provided with a charging opening (19) and a drawing-out opening (20) and containing a spiral conveying device (23) provided with a helical path (24) for conveying the bakery, Viennese bread or the like products, arranged on trays, plates, racks or the like (27), from the charging opening (19) to the drawing-out opening (20), which oven is characterized in that it comprises frames (29) ensuring the individual picking-up of said plates, trays, racks or the like (27) outside the baking chamber (2), to convey them through this latter by means of the spiral conveying device (23), this latter comprising means (28) for individually conveying and guiding said frames (29) along the helical path (24).

2. Baker's oven according to claim 1, characterized in that the helical path (24) is comprised of two rails (25, 26) arranged concentrically to each other and describing a spiral-shaped path these rails (25, 26) being supported by means of posts (80, 81) provided with a bracket (82) and arranged in the inner part (83) and at the periphery (84), respectively, of this helical path (24).

3. Baker's oven according to claims 1 and 2, characterized in that the frames (29) consist of frameworks formed of an assembly of angle-irons and the sizes of which are slightly larger than the trays, plates, racks or the like (27), so as to be capable of containing these latter, these frames (29) being provided with rolling means (63) facilitating their progress along the rails (25, 26), these rolling means (63) being comprised, on the one hand, of a perpendicularly inserted roller (64) in the vertical median plane, on the rear transversal edge (65) of the frame (29) and, on the other hand, of two radially inserted rollers (66, 67) in the proximity of the ends of the front transversal edge (65') of said frame (29).

4. Baker's oven according to claim 1, characterized in that the charging opening (19) and the drawing-out opening (20) are arranged in the upper (21) and lower part (22), respectively, of the baking chamber (2) and in a same vertical alignment, between these charging (19) and drawing-out openings (20) and outside the baking chamber (2) being established a looping circuit (31) for the frames (29) consisting of an elevator (32) formed of two norias (33, 34) opposite to each other and on which are horizontally arranged cleats (35, 36, 37) and (35', 36', 37'), respectively, capable of bearing said frames (29) taken out of the baking chamber (2), at the level of the drawing-out opening (20), by adequate means (71), then of lifting these frames (29) up to the level of the charging opening (19) through which they return to said baking chamber (2) under the action of a pushbutton (38).

5. Baker's oven according to claim 4, characterized in that the means (71) consist of at least one chain conveyer (72) penetrating into the baking chamber (2) through the drawing-out opening (20) and comprising one or several chains (73) provided with dogs (74) capable of co-operating with at least one seizing organ the front transversal edge (65') of the frames 29 is provided with, these dogs (74), under the action of the rotation of the chains (73), successively withdrawing the frames (29) from the baking chamber (2) to place them onto the cleats (35, 35') of the norias (33, 34)

6. Baker's oven according to claims 1 though 4, characterized in that it comprises means (77) capable of taking the tray, plate, rack or the like (27), provided with baked products, off the frame (29) proceeding from the baking chamber (2) and placing same onto a feed-out conveyer (76), these means (77) consisting of two small-size chain conveyers (78) which lift said tray, plate, rack or the like (27) to the height of said feed-out conveyer (76), passing through the framework formed by the frame (29).

7. Baker's oven according to claims 1 and 2, characterized in that the means (28) for individually conveying and guiding the frames (29) along the helical path (24) consist of a roundabout (44) subjected to a sequential rotary motion and comprising at least one set (39) of four vertical slides (40 through 43) plunging into the annular part defined by the rails (25, 26), these slides (40 through 43) consisting of angle-irons capable of enclosing one or several superposed frames (29).

8. Baker's oven according to claim 7, characterized in that the slides (40 and 41), arranged at the periphery of the roundabout (44), have, at the level of their upper end (48) and lower end (49), notches (50, 51) allowing the passing-through of the frames (29) when same are located in front of the charging opening (19) and the drawing-out opening (20).

9. Baker's oven according to claims 7 and 8, characterized in that:
- on the one hand, each set (39) of slides (40 through 43) of the roundabout (44) comprises, in its upper part (52), means (53) capable of ensuring the transfer of the frames (29) from the charging opening (19) onto the rails (25, 26) of the helical path (24), these means (53) consisting of two angle-irons (54, 55) arranged at the upper ends (48) of the slides (40, 42) and the slides (41, 43), respectively, and subjected to a rotary motion about a horizontal axis (56, 57), so that, on the one hand, in active position, one of their wings (58) is arranged in a substantially horizontal plane and on which can rest one of the side edges (59, 60) of the frames (29) coming from the charging opening (19) and, on the other hand, they are capable of withdrawing under the action of actuating levers (61, 62) actuated by actuating means, such as a cam or the like, when said frames (29) are arranged in front of the rails (25, 26) of the helical path (24),
- on the other hand, the rails (25, 26) forming this helical path (24) are interrupted in the vicinity of the drawing-out opening (20), allowing the frames (29), before being drawn out from the baking chamber (2), to rest on a horizontal bearing plane (70) provided for at the lower end (49) of the slides (40 through 43) of a set (39) of the roundabout (44).

10. Baker's oven according to claim 7, characterized in that the roundabout (44) consists of an upper tray (45) consisting of a wire netting or the like and subjected to a sequential rotary motion by driving means (46), to this upper tray (45) being joined the upper ends (48) of the slides (40 through 43) of the various sets (39), these slides (40 through 43) being, furthermore, made integral, at the level of their lower end (49), with an annular plate (47) in the form of a wire netting or the like, conferring to the roundabout (44) a better rigidity and comprising rolling means (85) resting on the lower pannel (5) of the baking chamber (2).

11. Baker's oven according to claim 10, characterized in that the roundabout (44) is centered with respect to the baking chamber (2), on the one hand, by means of the guiding, through the upper panel (4) of this latter, of a driving shaft (86) connecting the upper tray (45) of this roundabout (44) to the driving means (46) and, on the other hand, by means of rollers (87) inserted under the lower annular plate (47) and co-operating with a circular guide (88) secured onto the lower panel (5) of the baking chamber (2).

12. Baker's oven according to claim 7, characterized in that the roundabout (44) is subjected to a sequential rotary motion by driving means (46) capable of conferring to same a progressive acceleration and deceleration at each rotation sequence.

13. Baker's oven according to claim 1, comprising a mechanical ventilation system (6), arranged on one side-wall (8) of the baking chamber (2), a recirculation circuit (9) for the air cooled down during its passing through this latter and blowing boxes (13) arranged on the lateral side (14), opposite the mechanical ventilation system (6), of said baking chamber (2), which oven is characterized in that the blowing boxes (13) comprise blowing openings (15) oriented towards the mechanical ventilation system (6) for generating a nearly horizontal hot-air stream, these blowing openings (15) starting at the level of the lower panel (5) of the baking chamber (2) and ending at some distance from the upper panel (4) of this latter, in order to achieve a relatively quiet blowing area in the upper part (21) of said baking chamber (2) in which is located the charging opening (19).

## Patentansprüche

1. Bäckereiofen zum kontinuierlichen Backen, umfassend eine Backkammer (2), die mit einer Beschickungsöffnung (19) und einer Herausnahmeöffnung (20) versehen ist und eine schraubenförmige Fördervorrichtung (23) enthält, die mit einem wendelförmigen Weg (24) zur Förderung, ab der Beschickungsöffnung (19) bis zur Herausnahmeöffnung (20), von auf Brettern, Platten, Netzen oder dergleichen (27) angeordneten Brot-, Wienerback- und dergleichen Waren versehen ist, welcher Ofen dadurch gekennzeichnet ist, daß er Gestelle (29) umfaßt, die die einzelne Aufnahme der genannten Bretter, Platten, Netze oder dergleichen (27) außerhalb der Backkammer (2) sichern, um sie mittels der schraubenförmigen Fördervorrichtung (23) durch diese letzte zu führen, wobei diese Fördervorrichtung (23) Mittel (28) zur einzelnen Förderung und Führung der genannten Gestelle (29) entlang dem wendelförmigen Weg (24) umfaßt.

2. Bäckereiofen nach Anspruch 1, dadurch gekennzeichnet, daß der wendelförmige Weg (24) aus zwei konzentrisch zu einander angeordneten und einen wendelförmigen Weg beschreibenden Schienen (25, 26) besteht, wobei diese Schienen (25, 26) von mit einem Tragarm (82) versehenen und respektive im Innenteil (83) und am Umkreis (84) dieses wendelförmigen Wegs (24) angeordneten Ständern (80, 81) unterstützt werden.

3. Bäckereiofen nach Ansprüchen 1 und 2, dadurch gekennzeichnet, daß die Gestelle (29) aus durch eine zusammensetzung von Winkeleisen gebildeten Rahmen bestehen, deren Abmessungen geringfügig größer als die Bretter, Platten, Netze oder dergleichen (27) sind, sodaß sie geeignet sind, diese letzten zu enthalten, wobei diese Gestelle (29) mit Rollmitteln (63) versehen sind, welche ihren Vorschub entlang den Schienen (25, 26) erleichtern, wobei diese Rollmittel (63), einerseits, aus einem senkrecht und in der senkrechten Mittelebene am hinteren Querrand (65) des Gestells (29) befestigten Rädchen (64) und, andererseits, aus zwei radial und in der Nähe der Enden am vorderen Querrand (65') des genannten Gestells (29) befestigen Rädchen (66, 67) bestehen.

4. Bäckereiofen nach Anspruch 1, dadurch gekennzeichnet, daß die Beschickungsöffnung (19) und die Herausnahmeöffnung (20) respektive im oberen (21) und im unteren Teil (22) der Backkammer (2) und in einer gleichen senkrechten Ausrichtung angeordnet sind, wobei zwischen diesen Beschickungs- (19) und Herausnahmeöffnungen (20) und außerhalb der Backkammer (2) ein Schlingenkreis (31) für die Gestelle (29) angeordnet ist, der aus einem Aufzug (32) besteht, der von zwei gegenübereinanderliegenden Schöpfrädern (33, 34) gebildet ist und auf denen Querleisten, respektive (35, 36, 37) und (35', 36', 37'), waagerecht angeordnet sind, welche geeignet sind, die genannten, durch geeignete Mittel (71) auf Höhe der Herausnahmeöffnung (20) aus der Backkammer (2) herausgenommenen Gestelle (29) zu unterstützen, diese Gestelle (29) danach bis zur Höhe der Beschickungsöffnung (19), durch die sie durch Bedienung eines Druckknopfes (38) zur gennanten Backkammer (2) zurückkehren, zu heben.

5. Bäckereiofen nach Anspruch 4, dadurch gekennzeichnet, daß die Mittel (71) wenigstens aus einem Kettenförderer (72) bestehen, der durch die Herausnahmeöffnung (20) in die Backkammer (2) hineinführt und eine oder mehrere Ketten (73) umfaßt, die mit Zapfen (74) versehen ist (sind), die geeignet sind, mit wenigstens einem Greiforgan, womit der vordere Querrand (65') der Gestelle (29) versehen ist, zusammenzuwirken, wobei diese Zapfen (74) die Gestelle (29) unter der Einwirkung der Drehung der Ketten (73) nacheinander aus der Backkammer (2) nehmen, um sie auf die Querleisten (35, 35') der Schöpfräder (33, 34) zu legen.

6. Bäckereiofen nach Ansprüchen 1 bis 4, dadurch gekennzeichnet, daß er Mittel (77) umfaßt, die geeignet sind, das (die) mit gebackenen Waren geladene Brett, Platte, Netz oder dergleichen (27) ab dem von der Backkammer (2) kommenden Gestell (29) zu nehmen und es (sie) auf einen Abfuhrförderer (76) zu legen, wobei diese Mittel (77) aus zwei Kettenförderern (78) geringer Abmessungen bestehen, die das (die) genannte Brett, Platte, Netz oder dergleichen (27) bis zur Höhe des genannten Abfuhrförderers (76) durch den vom Gestell (29) gebildeten Rahmen hindurch heben.

7. Bäckereiofen nach Ansprüchen 1 und 2, dadurch gekennzeichnet, daß die Mittel (28) zur einzelnen Förderung und Führung der Gestelle (29) entlang dem wendelförmigen Weg (24) aus einem Karussell (44) bestehen, das einer sequenziellen Drehbewegung ausgesetzt ist und wenigstens einen Satz (39) von vier senkrechten Gleitstücken (40 bis 43) umfaßt, die in den von den Schienen (25, 26) bestimmten ringförmigen Teil tauchen, wobei diese Gleitstücke (40 bis 43) aus Winkeleisen bestehen, die geeignet sind, ein oder mehrere übereinanderliegenden Gestelle (29) einzuschließen.

8. Bäckereiofen nach Anspruch 7, dadurch gekennzeichnet, daß die auf dem Umkreis des Karussells angeordneten Gleitstücke (40 und 41) im Bereich ihres oberen (48) und unteren Endes (49) Ausschnitte (50, 51) umfassen, die den Durchgang der Gestelle (29), wenn sich diese letzten gegenüber der Beschickungsöffnung (19) und der Herausnahmeöffnung (20) befinden, gestatten.

9. Bäckereiofen nach Ansprüchen 7 und 8, dadurch gekennzeichnet, daß:
- einerseits, jeder Satz (39) Gleitstücke (40 bis 43) des Karussells (44) an dessen Unterteil (52) Mittel (53) umfaßt, die geeignet sind, die Übertragung der Gestelle (29) ab der Beschickungsöffnung (19) auf die Schienen (25, 26) des wendelförmigen Wegs (24) zu sichern, wobei diese Mittel (53) aus zwei an den oberen Enden (48) respektive der Gleitstücke (40, 42) und der Gleitstücke (41, 43) angeordneten Winkeleisen (54, 55) bestehen, die einer sequentiellen Drehbewegung um eine waagerechte Achse (56, 57) ausgesetzt sind, sodaß, einerseits, in aktiver Stellung, einer deren Flügel (58) in einer im wesentlichen waagerechten Ebene angeordnet ist, auf dem einer der Seitenränder (59, 60) der von der Beschickungsöffnung (19) kommenden Gestelle (29) ruhen kann, und, andererseits, sie in der Lage sind, sich unter der Einwirkung von Steuerhebeln (61, 62), die durch Betätigungsmittel, wie ein Nocken oder dergleichen, betätigt werden, zurückzuziehen, nachdem die genannten Gestelle (29) gegenüber den Schienen (25, 26) des wendelförmigen Wegs (24) angeordnet sind,
- andererseits, die diesen wendelförmigen Weg (24) bildenden Schienen (25, 26) in der Nähe der Herausnahmeöffnung (20) unterbrochen sind, was es den Gestellen (29) erlaubt, bevor sie aus der Backkammer (2) herausgenommen werden, auf einer am unteren Ende (49) der Gleitstücke (40 bis 43) eines Satzes (39) des Karussells (44) vorgesehenen waagerechten Abstützungsebene (70) zu ruhen.

10. Bäckereiofen nach Anspruch 7, dadurch gekennzeichnet, daß das Karussell (44) aus einem aus einem Metallgitterwerk oder dergleichen gebildeten oberen Brett (45) besteht, das über Antriebmittel (46) einer sequenziellen Drehbewegung ausgesetzt ist, wobei an diesem oberen Brett (45) die oberen Enden (48) der Gleitstücke (40 bis 43) der verschiedenen Sätze (39) befestigt sind, wobei diese Gleitstücke (40 bis 43) außerdem im Bereich ihres unteren Endes (49) fest mit einer als ein Metallgitterwerk oder dergleichen ausgestalteten ringförmigen Platte (47) verbunden sind, wodurch dem Karussell (44) eine bessere Starrheit verleiht wird, und auf das untere Paneel (5) der Backkammer (2) anlehnende Rollmittel (85) umfassen.

11. Bäckereiofen nach Anspruch 10, dadurch gekennzeichnet, daß das Karussell (44) bezüglich der Backkammer (2), einerseits, mittels der Führung, durch das obere Paneel (4) dieser letzten hindurch, einer Antriebwelle (86), die das obere Brett (45) dieses Karussells (44) mit den Antriebmitteln (46) verbindet, und, andererseits, mittels Laufrollen (87), die unter an der unteren ringförmigen Platte (47) befestigt sind und mit einer am unteren Paneel (5) der Backkammer (2) befestigten kreisförmigen Führung (88) zusammenwirken, zentriert ist.

12. Bäckereiofen nach Anspruch 7, dadurch gekennzeichnet, daß das Karussell (44) über Antriebmittel (46), die geeignet sind, diesem letzten bei jeder Drehsequenz eine allmählige Beschleunigung oder Verlangsamung zu verleihen, einer sequenziellen Drehbewegung ausgesetzt ist.

13. Bäckereiofen nach Anspruch 1, umfassend ein an einer Seitenwand (8) der Backkammer (2) angeordnetes mechanisches Lüftungssystem (6), einen Umlaufkreis (9) für die während ihres Durchgangs durch diese letzte abgekühlte Luft und an der dem mechanischen Lüftungssystem (6) der genannten Backkammer (2) gegenüberliegenden Seitenfläche (14) angeordnete Blasekästen (13), welcher Ofen dadurch gekennzeichnet ist, daß die Blasekästen (13) zum mechanischen Lüftungssystem (6) hin gerichtete Blaseöffnungen (15) umfassen, um eine nahezu waagerechte Heizluftströmung zu erzeugen, wobei diese Bläseöffnungen (15) auf Höhe des unteren Paneels (5) der Backkammer (2) anfangen und auf einem bestimmten Abstand vom oberen Paneel (4) dieser letzten enden, um einen verhältnismäßig ruhigen Blasebereich im oberen Teil (21) der genannten Backkammer (2), in dem sich die Beschickungsöffnung (19) befindet, zu erhalten.
